# EUROPEAN PATENT APPLICATION

(11) **EP 2 827 603 A1**
(43) Date of publication of application: **21.01.2015**
(21) Application number: 14177726.8
(22) Date of filing: 18.07.2014
(51) Int. Cl.: H04N 21/462, H04N 21/482, H04N 21/858

(54) **Broadcasting receiver, method of controlling broadcasting receiver, method of controlling information providing apparatus, and computer-readable recording medium**

(30) Priority: 19.07.2013 US 201361856115 P; 28.02.2014 GB 201403584; 18.06.2014 KR 20140074193
(71) Applicant: Samsung Electronics Co., Ltd, Gyeonggi-do 443-742 (KR)
(72) Inventor: Baker, Stephen, Reading, Berkshire RG4 8LF (GB); Bernanrd, Thomas, Bracknell, Berkshire RG12 7WH (GB); Muller, Yann, Reading, Berkshire RG1 2NT (GB); Outters, Jan-David Stéphane, Ashford, surrey TW15 2AX (GB); Alder, Christopher, Wokingham, Berkshire RG40 5YB (GB)
(74) Representative: Taor, Simon Edward William

(57) **Abstract**

A broadcasting receiver is arranged to provide linear services broadcasting linear events related to a predetermined time and non-linear services broadcasting static events regardless of time. The broadcasting receiver includes a receiver to receive a plurality of linear services each including a plurality of linear events broadcast at the predetermined times, a discovery information receiver to receive event discovery information including event type information for identifying a type of static event related to discovery information defining a plurality of static events, a processor to control a display unit to display a channel guide including the linear services and the non-linear services, and a user input receiver to receive user input selecting one of the static events from the channel guide, where the processor is performs one of a plurality of predetermined actions corresponding to the type of static event selected by the user input.

## Description

The embodiments relate to a broadcasting receiver, method of controlling the broadcasting receiver, method of controlling an information providing apparatus, and a non-transiting computer-readable recording medium. More particularly, the embodiments relate to a channel guide which includes a non-linear service in addition to a plurality of linear services.

A broadcast receiver can be used to receive and display content, for example TV and/or radio broadcast programs, on a plurality of channels received through a broadcast stream. To enable a user to review the available programs and select one of the programs for viewing, a channel guide is displayed which lists the broadcast channels and shows information about programs that are due to be broadcast within a certain time window. The channel guide can also be referred to as an Electronic Program Guide (EPG).

A conventional EPG is generated using metadata supplied by the broadcaster. Various functions can be performed through the channel guide. For example, the channel guide can be used to select content for immediate viewing, for current or future recording, or can be used to set a reminder for a program to be broadcast in the future. In addition, modern broadcast receivers often provide additional functionality, such as the ability to access video on demand (VOD) content, or to browse the Internet. However, as more functions are added, the user interface becomes more cumbersome as the user must navigate through various menu screens to locate and select the desired function.

The embodiments are made in this context.

According to the embodiments, there is provided a method of controlling a digital broadcasting receiver arranged to receive a plurality of linear services each including a plurality of linear events broadcast at predetermined times, the method comprising: receiving event discovery information defining a plurality of static events, the event discovery information including event type information identifying the type of static event to which the discovery information relates; displaying a channel guide including the plurality of linear services and a non-linear service, the non-linear service including the plurality of static events; and in response to user input selecting one of the static events in the non-linear service from the channel guide, performing one of a plurality of predetermined actions corresponding to the type of static event selected.

The method can further comprise, in response to user input selecting one of the linear services, tuning to the broadcast stream to receive the selected linear service.

In some embodiments, the plurality of static events includes a content group static event for selecting a group of content items, and the method further comprises: searching one or more content sources to identify a plurality of available content items from said group of content items, available from the one or more content sources; in response to the user input selecting the content group static event, displaying a content selection menu for selecting one of the available content items; and in response to second user input selecting one of the available content items from the content selection menu, obtaining and reproducing the selected content item.

In some embodiments, the event discovery information defining the content group static event includes one or more source identifiers for identifying the one or more content sources to be searched.

In some embodiments, the method further comprises: receiving service discovery information identifying content relating to the non-linear service; and in response to user input navigating to the non-linear service in the channel guide, reproducing the identified content in the channel guide.

In some embodiments, the service discovery information includes content location information defining a location from which the content can be obtained, and the method further comprises: obtaining the content from the location identified by the content location information.

In some embodiments, the service discovery information includes loop information indicating whether the content relating to the non-linear service is to be looped, wherein in response to the loop information indicating that the content is to be looped, the identified content is reproduced again from the beginning after reproduction of the identified content has completed, and wherein in response to the loop information indicating that the content is not to be looped, the identified content is reproduced only once in the channel guide.

In some embodiments, displaying the channel guide including the linear services and the non-linear service comprises: displaying identification information for each one of the linear services; and displaying identification information for the non-linear service differently to the identification information for each one of the linear services.

In some embodiments, the identification information for the non-linear service comprises an identifier of the service, and/or a textual description of the service, and/or an image corresponding to the service, and/or a webpage at a location identified by a Uniform Resource Locator URL included in the discovery information.

In some embodiments, the identification information for the non-linear service is displayed according to one or more display settings including: a navigation style setting defining a navigation method to be applied when a user navigates the channel guide; and/or a color setting defining a color in which the identification information is to be displayed in the channel guide; and/or a dimension setting defining the size of a region in which the identification information is to be displayed in the channel guide; and/or
an animation setting defining an animation to be applied when displaying the identification information in the channel guide.

In some embodiments, the service discovery information and/or the event discovery information includes display information defining the one or more display settings.

In some embodiments, the event discovery information further includes scripting information identifying a predefined condition and a predefined action to change the appearance of the non-linear service in the channel guide, wherein while displaying the channel guide, the method further comprises: determining whether the predefined condition has been met; and in response to the predefined condition being met, performing the predefined action to change the appearance of the non-linear service in the channel guide.

In some embodiments, the method further comprises: receiving service discovery information for each one of a plurality of non-linear services, the service discovery information for each non-linear service including a Logical Channel Number LCN for that non-linear service, wherein different ones of the plurality of non-linear services share the same LCN.

In some embodiments, the plurality of predetermined actions include: connecting to a server to receive and reproduce online audio and/or video content; and/or connecting to a local source to receive and reproduce local audio and/or video content; and/or launching a web browser application to display a webpage identified by a Uniform Resource Locator URL included in the event discovery information; and/or launching an application at the receiver; and/or displaying a banner over the channel guide; and/or setting a reminder for one of the linear events due to be broadcast at a predetermined time in the future; and/or switching an input source of a display to reproduce content from a different source; and/or selecting one or more linear services and/or one or more non-linear services according to a predetermined criteria, and displaying the selected linear services and/or non-linear services in a second channel guide separate to the previously-displayed channel guide.

In some embodiments, the non-linear service further includes one or more linear events.

In some embodiments, the receiver is a Digital Video Broadcasting DVB receiver.

According to the embodiments, there is also provided a method of controlling a server, the method comprising: obtaining event discovery information for each one of a plurality of static events, the event discovery information including event type information identifying the type of static event to which the event discovery information relates; and transmitting the event discovery information to a digital broadcasting receiver.

In some embodiments, the method further comprises: obtaining service discovery information identifying content relating to a non-linear service, the non-linear service including the plurality of static events; and transmitting the service discovery information to the digital broadcasting receiver.

A computer-readable storage medium can be arranged to store a computer program which, when executed on a processor, performs any of the above-described methods.

According to the embodiments, there is further provided a digital broadcasting receiver comprising: a receiver arranged to receive a plurality of linear services each including a plurality of linear events broadcast at predetermined times; a discovery information receiver arranged to receive event discovery information defining a plurality of static events, the event discovery information including event type information identifying the type of static event to which the discovery information relates; a processor arranged to control a display unit to display a channel guide including the plurality of linear services and a non-linear service, the non-linear service including the plurality of static events; and a user input receiver arranged to receive user input, wherein in response to the user input selecting one of the static events in the non-linear service from the channel guide, the processor is arranged to perform one of a plurality of predetermined actions corresponding to the type of static event selected by the user input.

In some embodiments, the plurality of static events includes a content group static event for selecting a group of content items, and the digital broadcasting receiver further comprises: a content searching unit arranged to search one or more content sources to identify a plurality of available content items from said group of content items, available from the one or more content sources, wherein in response to the user input selecting the content group static event, the predetermined action comprises displaying a content selection menu for selecting one of the available content items, and in response to second user input selecting one of the available content items from the content selection menu, obtaining and reproducing the selected content item.

In some embodiments, the discovery information receiver is further arranged to receive service discovery information identifying content relating to the non-linear service, and in response to the user input navigating to the non-linear service in the channel guide, the processor is arranged to reproduce the identified content in the channel guide.

In some embodiments, the service discovery information includes content location information defining a location from which the content can be obtained, and the digital broadcasting receiver is arranged to obtain the content from the location identified by the content location information.

In some embodiments, the service discovery information includes loop information indicating whether the content relating to the non-linear service is to be looped, wherein in response to the loop information indicating that the content is to be looped, the processor is arranged to reproduce the identified content again from the beginning after reproduction of the identified content has completed, and wherein in response to the loop information indicating that the content is not to be looped, the processor is arranged to reproduce the identified content only once in the channel guide.

In some embodiments, the processor is arranged to display identification information for each one of the linear services in the channel guide, and is further arranged to display identification information for the non-linear service differently to the identification information for each one of the linear services.

In some embodiments, the processor is arranged to display the identification information for the non-linear service according to one or more display settings including: a navigation style setting defining a navigation method to be applied when a user navigates the channel guide; and/or a color setting defining a color in which the identification information is to be displayed in the channel guide; and/or a dimension setting defining the size of a region in which the identification information is to be displayed in the channel guide; and/or an animation setting defining an animation to be applied when displaying the identification information in the channel guide.

In some embodiments, the event discovery information further includes scripting information identifying a predefined condition and a predefined action to change the appearance of the non-linear service in the channel guide, wherein while displaying the channel guide, the processor is arranged to determine whether the predefined condition has been met, and in response to the predefined condition being met, perform the predefined action to change the appearance of the non-linear service in the channel guide.

In some embodiments, the discovery information receiver is further arranged to receive service discovery information for each one of a plurality of non-linear services, the service discovery information for each non-linear service including a Logical Channel Number LCN for that non-linear service, and different ones of the plurality of non-linear services share the same LCN.

The digital broadcasting receiver can be a Digital Video Broadcasting DVB receiver.

According to the embodiments there is provided a method of obtaining linear and static event information, producing a channel guide displaying the linear and static event information and allowing a user to select a static event of the static event information using the program guide and a broadcast receiver performing an action associated with the static event, where the static event may include one of operating a device, access video content, access audio content, access online content, display and advertisement and set a reminder for a linear event and where the static event information arranges disparate content sources into a single content list.

According to an aspect of the invention, there is provided a broadcasting receiver comprising: a receiver arranged to receive a plurality of linear services each including a plurality of linear events broadcast at predetermined times; a discovery information receiver arranged to receive event discovery information including event type information for identifying a type of static event related to discovery information defining a plurality of static events; a processor arranged to control a display unit to display a channel guide including the linear services and the non-linear services; and a user input receiver arranged to receive user input selecting one of the static events of the non-linear services from the channel guide, wherein the processor is arranged to perform one of a plurality of predetermined actions corresponding to the type of static event selected by the user input.

According to an aspect of the invention, there is provided a broadcasting receiver as set out in claim 1. Preferred features are set out in claims 2 to 14.

According to an aspect of the invention, there is provided method of controlling a broadcasting receiver as set out in claim 15.

Embodiments will now be described, by way of example only, with reference to the accompanying drawings, in which:
Figure 1 shows a user interface displaying a channel guide including linear services and non-linear services, according to an embodiment;
Figure 2 shows a flow diagram explaining a method of controlling a digital broadcasting receiver, according to an embodiment;
Figure 3 shows a flow diagram explaining a method of accessing recorded content through a channel list, according to an embodiment;
Figure 4 shows a flow diagram explaining a method of reproducing content relating to a non-linear service in a channel guide, according to an embodiment;
Figure 5 shows a flow diagram explaining a method of using scripting information to change the appearance of a non-linear service in a channel guide, according to an embodiment;
Figure 6 shows a flow diagram explaining a method of providing discovery information to a receiver, according to an embodiment; and
Figure 7 schematically shows a system including a digital broadcasting receiver and a server for providing discovery information to the receiver, according to an embodiment.

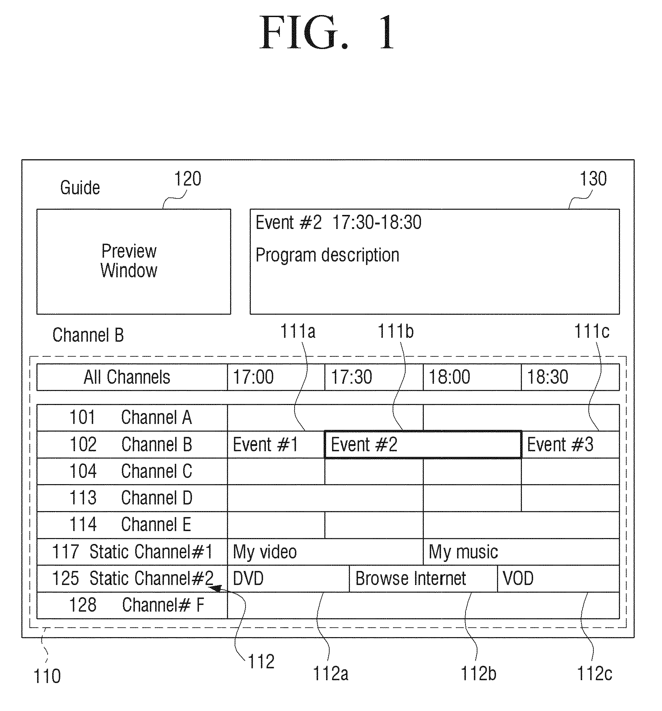

Figure 1 schematically shows a user interface displaying a channel guide including linear services and non-linear services, according to an embodiment.

Similar to a conventional channel guide, the channel guide of the embodiments allow a user to review and select broadcast content from a plurality of channels.

The channel guide 100 of the embodiments include a channel list 110. The channel list 110 includes a plurality of linear services ordered according to their Logical Channel Numbers (LCNs), which can be assigned by a broadcaster. The linear services are commonly referred to as channels, and each one comprises a plurality of linear events. Each linear event represents a separate broadcast program. Here, 'linear' means that the events within a service are broadcast in a linear fashion. That is to say, the events within a linear service are broadcast sequentially, in a specific order and at specific times. The linear services can, for example, be Radio Frequency (RF) broadcasting services, satellite broadcasting services, or Internet Protocol (IP) broadcasting services.

In the example shown in Fig. 1, the channel list displays six linear services (Channel A to Channel F), which are assigned the LCNs 101, 102, 104, 113, 114, 128. It will be understood that these specific channel names and LCNs are merely exemplary. In other embodiments a different number of channels could be displayed in the channel list, and any names and LCNs can be assigned to the channels.

Within the channel list 110, channel identifiers, for instance "Channel A", "Channel B", and so on, for the displayed channels are ordered according to the channel LCNs in a first direction. The linear events broadcast within a certain time window are arranged along a second direction, representing time, adjacent to the channel identifiers. The width of each linear event in the channel list 110 relates to the duration of that event, i.e. the time between the broadcast start and end times for that event. In the present example the first and second directions are the vertical and horizontal directions respectively, although in other embodiments different layouts could be used in the channel list 110.

As shown in Fig. 1, the linear events broadcast on the linear services within a certain time window are displayed. Here, by 'displaying' a linear event in the channel list 110, it is meant that an area via which a linear event can be selected is displayed. The area through which a linear event is selected may be referred to as a 'selection area'. Within each selection area, an event identifier for that linear event is displayed, for example a name of the broadcast program. The channel identifiers and event identifiers can be defined by metadata, which could, for example, be received through the broadcast stream or over IP. Such metadata can also define, for instance, the LCNs for the linear services, the broadcast times for the linear events, and textual descriptions of the linear events.

In the example shown in Fig. 1, the channel list 110 is shown as displaying linear events that are broadcast within the time window 17:00-19:00. On channel B, for instance, three linear events 111a, 111b, 111c are broadcast between 17:00-19:00. The first linear event 111a is broadcast until 17:30, the second linear event 111b is broadcast between 17:30-18:30, and the third linear event 111c is broadcast from 18:30.

To view a program currently being broadcast on a particular channel, a user navigates through the channel list to the desired event. Any type of interface can be used to navigate the channel guide 100, for example a conventional remote controller or a motion recognition interface. In the present example, the currently selected linear event is denoted by highlighting the current selection area. In the present example, the second linear event 111b on Channel B is selected.

In the present example, the channel guide 100 also includes a preview window 120 and an event information display area 130. When a linear event currently being broadcast is selected by first user input, visual content for the linear event can be displayed in the preview window 120, and information about the linear event, for example, a textual description of the program, can be displayed in the event information display area 130. When the same linear event is selected by a second user input, video content currently being broadcast for that linear event can be displayed in full-screen mode. It will be understood that the preview window 120 might not be used if no visual content is available, for example, when the linear event is a radio program. In some embodiments, the preview window 120 and event information display area 130 can be omitted entirely.

In addition, as shown in Fig. 1 the channel list 110 further includes two static channels, labeled as Static Channel #1 and Static Channel #2. Although two static channels are shown in the present example, in general an embodiment can include any number of one or more static channels, i.e. non-linear services, in a channel list. Here, a 'static' channel is a channel which includes a plurality of events that that are accessible at any time. Such events are hereinafter referred to as 'static events', in contrast to a conventional linear event which can only be accessed at the predefined broadcast time. That is, whereas a linear event disappears from the channel list after it has been broadcast, a static event remains in place since it is not associated with a specific broadcast time. Each static channel can be referred to as a 'non-linear service', by analogy with conventional broadcast channels which are linear services.

As described above, the width of each linear event in the channel list 110 is determined according to time duration of the linear event. However, as the static events are not associated with particular broadcast times, the receiver must determine the width of each static event in other ways. In the present embodiment, event discovery information is received for each static event. The event discovery information includes a width attribute which defines the static event width as a fraction or percentage of the total width of the available screen area in the channel list. Preferably, the width of all static events in a given non-linear service should add up to 100%, although this is not essential. For example, if the widths add up to less than 100%, the receiver could pad out the space between the static events, or could increase the width of each static event accordingly. Furthermore, in some embodiments the receiver can determine the widths automatically, for example by setting all static events for a non-linear service to equal widths, instead of the width being defined by event discovery information.

In response to a user input selecting a linear event currently being broadcast from the channel list 110, the receiver is arranged to access the selected linear event by tuning to the selected channel in the broadcast stream and reproducing the received audio and/or video content. On the other hand, if the user input selects a linear event that is not currently accessible, for example, by selecting a future event that is not currently being broadcast, the receiver can perform another action, such as setting a reminder or scheduling the selected event for recording or playing. However, as described above, a static event is not associated with a specific broadcast time. Therefore in response to user input selecting one of the static events from the channel list 110, the receiver can access the static event immediately regardless of the time at which the static event is selected.

Unlike a linear event, static events in the channel guide 100 are not limited to multimedia content in embodiments of the invention. A static event can be used to select various receiver functions, in addition to accessing and reproducing audio/video content. In the present example, various types of static events are illustrated. As shown in Fig. 1, the second static channel 112 includes three static events 112a, 112b, 112c. In response to user input selecting the first static event 112a on the second static channel 112, that is, the static event labeled 'DVD', the receiver is arranged to switch the input source for a display from the broadcast stream to a connected DVD player. In response to the user input selecting the second static event 112b on the second static channel 112, that is, the static event labeled 'Browse Internet', the receiver is arranged to launch a web browser application in order to access the Internet over a suitable network connection. In response to user input selecting the third static event 112c on the second static channel 112, that is, the static event labeled 'VOD', the receiver is arranged to display a video-on-demand (VOD) selection menu for a user to review and select available VOD content.

Also shown in Fig. 1 are other static events on the first static channel, labeled 'My videos' and 'My music'. These static events can be used to browse content grouped according to type. In response to a user input to select one of these static events, the receiver is arranged to display information about stored video files or music files, respectively, for a current user profile. For example, the video files or music files may be stored locally in a hard disk drive or other storage unit, and/or may be stored remotely, for example in cloud-based storage.

Static events are not limited to the above-described actions in embodiments of the invention. Other actions that can be performed in response to a particular static event being selected include, but are not limited to: connecting to a server to receive and reproduce online audio and/or video content (for example when the static event relates to a specific VOD content item); connecting to a local source to receive and reproduce local audio and/or video content (for example when the static event relates to a specific item of locally recorded content); launching a web browser application to display a specific webpage identified by a Uniform Resource Locator URL included in event discovery information for the selected static event; launching an application at the receiver; displaying a banner over the channel guide (for example, an advert or advertisement for a forthcoming program on a particular broadcast channel); and setting a reminder for a linear event due to be broadcast at a predetermined time in the future.

Yet another example of a function that can be selected as a static event is launching a separate channel guide, which can be referred to as a 'sub-guide'. Here, one or more linear services and/or one or more non-linear services can be selected and displayed according to predetermined criteria. For example, a 'news' sub-guide could select and display only news channels, a 'sports' sub-guide could select and display only sports channels, and so on.

The use of static events provides the advantage that disparate content sources can be drawn together into a single list of content. For example, VOD content and locally recorded content can be added to the channel list in addition to conventional broadcast content. In contrast, in a conventional broadcast receiver a channel list can only display broadcast content, meaning that a user must navigate away from the channel list to access other types of content (e.g. video-on-demand content). The need to go through additional menu screens to access non-broadcast content means that the conventional receiver interface is slower to navigate and consumes more resources, as additional processing time and power is used when generating and displaying the other menu screens.

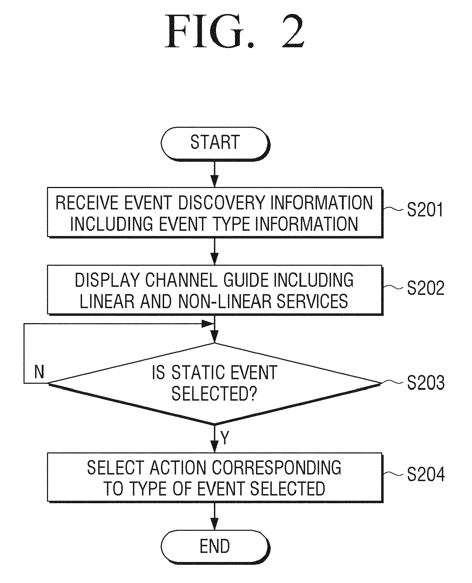

Figure 2 shows a flow diagram explaining a method of controlling a digital broadcasting receiver, according to an embodiment.

First, in step S201, the receiver receives event discovery information defining a plurality of static events. Event discovery is a well-understood process for identifying the services available to a receiver, and a detailed description will not be provided here. For example, a Digital Video Broadcasting (DVB) receiver performs a Service Discovery and Selection (SD&S) process on startup. The SD&S process requests service discovery information from one or more entry point servers, the addresses of which can be pre-programmed into the receiver or can be signaled through the broadcast stream. Each entry point server provides Service Provider (SP) discovery information which specifies the linear services available from each SP. The receiver obtains service discovery information for each linear service, and event discovery information for the events within each linear service.

In a DVB system, the different types of discovery information are provided as Extensible Markup Language (XML) records, and the type of discovery information is signalled by a payload identifier (ID). In DVB embodiments, a new payload type is defined for static events, to signal that the discovery information relates to a static event as opposed to a linear event. The payload ID values for a DVB embodiment are shown in Table 1.

**Table 1**

| PAYLOAD ID VALUE | RECORD TYPE |
|---|---|
| OXO1 | Service Provider Discovery Information |
| OXO2 | Broadcast Discovery Information |
| OXO5 | Package Discovery Information |
| OXO6 | BCG Discovery Information |
| OXFO | Static Event Discovery Information |

Although the payload ID value oxFo is used in the present example to signify static event discovery information, the embodiments are not limited to this specific value. In other embodiments, any unused payload ID value could be defined for the static event discovery information.

The event discovery information obtained in step S201 includes event type information identifying the type of static event to which the discovery information relates. The event type determines the receiver behavior when the static event is selected by user input. The format of the event discovery information can be defined in a broadcasting standard, which can also define the different types of static event. In general, any number of different static event types can be defined. Examples of static event types include a VOD static event, a webpage static event, a recorded content static event, a sub-guide static event, and so on. The receiver can be programmed to perform different predetermined actions for different types of static event, as described above with reference to Fig. 1.

After receiving the event discovery information for static events in a non-linear service, then in step S202 the receiver proceeds to generate a channel guide, such as the guide shown in Fig. 1, based on the obtained discovery information for the linear services and the non-linear service, and displays the channel guide. Depending on the embodiment, the channel guide could be displayed on a display integral to the receiver, or on a physically separate display. For example, the receiver could be integrated into a television, or could be a set-top-box (STB) connected to a television.

After displaying the channel guide, the receiver proceeds to step S203 and waits for user input selecting an event from the channel guide. Here, if user input selecting a linear event is received, the receiver can begin reproducing content from the selected linear event, or can set a reminder or schedule recording if the selected linear event is not currently being broadcast, in a conventional manner. However, if user input selecting a static event is received in step S203, then in step S204 the receiver proceeds to select and perform one of a plurality of predetermined actions corresponding to the type of static event selected. Types of static event and corresponding receiver actions have been described above with reference to Fig. 1, and will not be repeated here.

By using event discovery information for static events to build a channel list at a receiver, a service provider can control which static events are inserted into the channel list, by modifying the event discovery information accordingly.

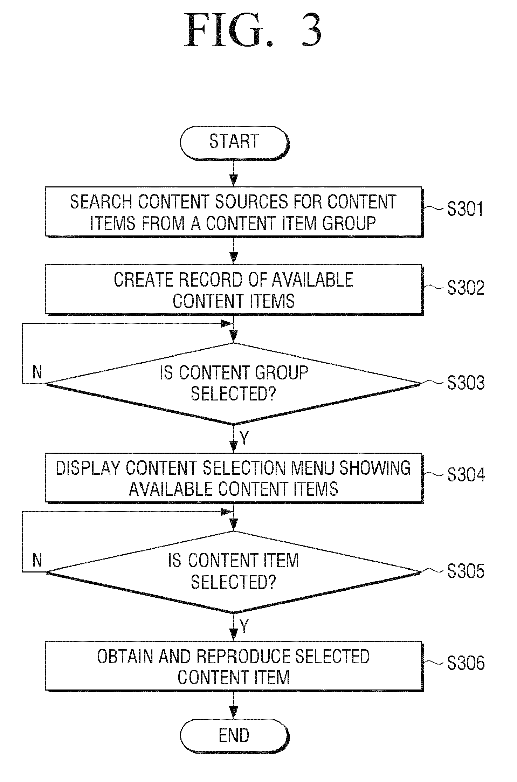

Figure 3 shows a flow diagram explaining a method of accessing recorded content through a channel list, according to an embodiment.

A method as shown in Fig. 3 can be used by a broadcasting receiver which displays a channel list including a static event relating to recorded content, for example the 'My videos' or 'My music' static events shown in Fig. 1. In particular, the method can be used when the channel guide includes a static event relating to a specific group of content items. Such a static event may be referred to as a 'content group static event'.

Content items can be grouped according to metadata associated with each content item. For example, content items can be grouped according to content type (e.g. 'news', 'sports', 'movies', 'documentaries' etc.), file type (e.g. audio, video, text, HTML etc.), content owner (e.g. 'My music', 'Jon's videos', 'Andrea's movies', etc.), and so on. The group can be defined by event discovery information for the content group static event, for example, by defining one or more selection criteria for selecting content to be included in the group.

First, in step S301, the receiver searches among one or more content sources for content items in a group defined by the event discovery information. The event discovery information can include one or more source identifiers for identifying the one or more sources to be searched. For example, the event discovery information may indicate that the receiver should search in one or more of: cloud-based storage associated with a user profile currently signed in to the receiver; a local storage unit within the receiver; and a home media server on a local network.

At step S302, the receiver creates a record of available content items found in the searched content sources. The record includes, for each available content item, a content identifier for identifying the content item and a location identifier for identifying the location of the content item on the corresponding content source. In some embodiments, this record could be updated periodically, to detect changes in available content. For example, content may have been recorded, moved, or deleted since the record was last created/modified, or a content source may have been connected or disconnected.

At step S303, the receiver waits for a user to select the content group static event. In response to user input selecting the content group static event, then, in step S304, the receiver displays a content selection menu for selecting one of the available content items, for example, by displaying a scrollable list of all available content items within the content group. The content selection menu could be displayed as a window overlying part of the channel guide, or could be displayed instead of (i.e. replacing) the channel guide.

Next, at step S305, the receiver waits for a user to select one of the content items from the displayed content selection menu. At step S306, in response to user input selecting one of the available content items from the content selection menu, the receiver identifies the location of the selected content item from the location identifier stored in the record of available content items, obtains the selected content item from the relevant location, and reproduces the selected content item.

As shown in Fig. 3, in the present embodiment the receiver identifies available content items within the content item group before the static event is selected from the channel list. Preferably, the receiver searches for the available content items as soon as event discovery information has been received, even before displaying the channel guide. However, in certain embodiments, steps S301 and S302 could be performed only in response to user input selecting the corresponding static event. This may result in a delay while the receiver searches for available content, but would avoid wasting time and resources searching unnecessarily, when a user is not interested in the static event.

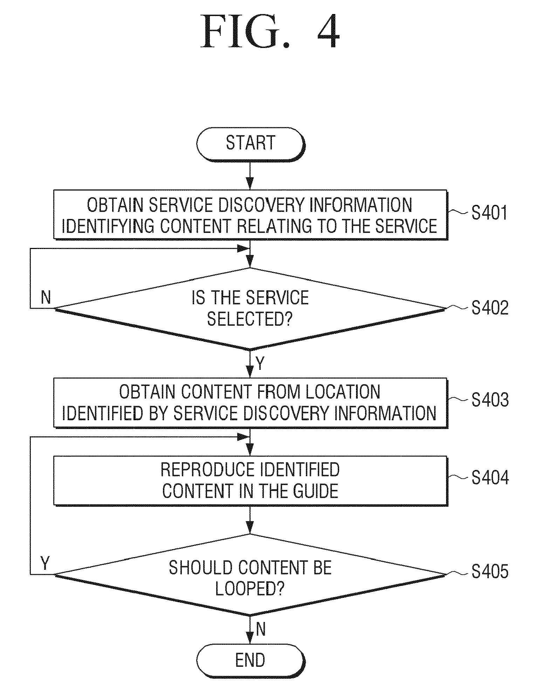

Figure 4 shows a flow diagram explaining a method of reproducing content relating to a non-linear service in a channel guide, according to an embodiment.

As described above, during service discovery the receiver can obtain service discovery information for a non-linear service, in addition to event discovery information for the static events included in the non-linear service. The service discovery information can define the static events included in the non-linear service, and can also include metadata to control how the non-linear service is displayed in the channel guide. In the present embodiment, the service discovery information includes a related content identifier which identifies content relating to the non-linear service. For example, the service location information can include content location information specifying a location of the content, in the form of a Uniform Resource Locator (URL) linking directly to the content, or in any other suitable form. Alternatively, instead of specifying the exact location, the content location information could specify a general location from which the content can be obtained (e.g. an IP address of a server), and the service location information can further include a unique identifier (e.g. a content reference identifier CRID) that can be used to request the content from the location.

At step S401, the receiver obtains the service discovery information identifying the content relating to the non-linear service. Examples of types of content that can be signalled by the service discovery information include video, audio, text, and hyper-text markup language (HTML) or extensible markup language (XML) content.

At step S402, the receiver waits for user input selecting a service from the channel guide. Here, the user input could select one of the linear services, or could select the non-linear service.

In response to user input selecting a linear service at step S402, instead of the non-linear service, the receiver can behave in a similar manner to a conventional receiver. Specifically, the receiver can begin receiving and reproducing content for a linear event currently being broadcast on the selected linear service. Depending on the embodiment, the content can be immediately reproduced in a full-screen mode, or can be reproduced in a preview window, such as the one shown in Fig. 1. Even though the linear service comprises a plurality of linear events, only one of these is being broadcast at any one time, and therefore it is straightforward for the receiver to begin reproducing the currently accessible linear event, which is the program currently being broadcast.

On the other hand, in response to user input selecting the non-linear service at step S402, the receiver proceeds to step S403. At step S403, the receiver obtains the content from the location identified by the content location information. In some embodiments, the receiver obtains the content as soon as the service discovery information is received, and stores the content locally. The local copy of the content is then retrieved when needed in step S403. In other embodiments, the content may be downloaded as and when required in step S403, without being stored beforehand.

Then, at step S404, the receiver reproduces the identified content in the channel guide. For example, when the identified content is visual content, the identified content can be reproduced in a preview window such as the one shown in Fig. 1.

In some embodiments, the method can finish at step S404. For example, when the content is static, such as a still image or webpage, the static content can be displayed in a preview window until a user selects one of the static events, or selects another service. However, if the content has a finite duration, for example, if the content is a video or audio clip, the service discovery information can further include loop information indicating whether the content relating to the non-linear service is to be looped.

In such embodiments, at step S405 the receiver checks whether the information indicates that the content is to be looped. In response to the loop information indicating that the content is to be looped, the identified content is reproduced again from the beginning after reproduction of the identified content has completed. The loop information can also indicate whether the content is to be looped indefinitely, or is to be looped a specific number of times.

On the other hand, in response to the loop information indicating that the content is not to be looped, the identified content is reproduced only once in the channel guide.

A receiver can use a method such as the one shown in Fig. 4 to display content related to a non-linear service, when the non-linear service is selected in the channel list. The behavior of the receiver when the non-linear service is selected contrasts with the behaviour when a linear service is selected.

In contrast, when a user selects a non-linear service including a plurality of static events, all of the static events can be accessible at the same time. Therefore, in the present embodiment, instead of beginning to reproduce content from a particular one of the static events, the receiver instead begins reproducing the content identified by the service discovery information, which could provide general information about the non-linear service as a whole. This approach allows service providers to customize the receiver behavior when the non-linear service is selected. Here, by selecting a non-linear service, it is meant that the user input selects the non-linear service without identifying a specific one of the static events for that service. For example, a user could enter the LCN of the non-linear service through a remote controller, which would identify the non-linear service without identifying a specific static event.

In other embodiments the receiver may take no action when the non-linear service is selected, but may wait for a user to select a specific static event from the non-linear service. In such embodiments, the receiver does not have to perform any of the method steps shown in Fig. 4.

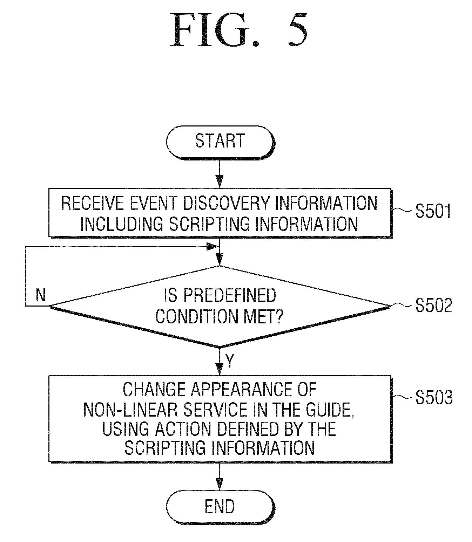

Figure 5 shows a flow diagram explaining a method of using scripting information to change the appearance of a non-linear service in a channel guide, according to an embodiment.

In the present embodiment, the event discovery information and/or service discovery information includes scripting information to apply some form of animation to the non-linear service. The scripting information can be used to dynamically alter the appearance of a non-linear service in the channel guide, for example, to draw attention to the non-linear service and/or to enable a user to distinguish non-linear services from linear services.

At step S501, event discovery information is received which includes scripting information. The scripting information identifies a predefined condition and a predefined action to change the appearance of the non-linear service in the channel guide. In the present example, the predefined condition is a fixed time period (e.g. 10 seconds), and the predefined action is to reorder the static events within the non-linear service.

At step S502, the receiver waits until the predetermined condition has been met. In the present example, the receiver waits until a 10-second time period has elapsed since a starting point, which could be the time at which the receiver began displaying the channel guide, or the time at which the predefined action was previously applied to the non-linear service.

Then at step S503, in response to the predefined condition being met, the receiver performs the predefined action to change the appearance of the non-linear service in the channel guide. In the present example, the receiver changes the order in which the static events are displayed for the non-linear service, in the channel guide. For example, if the service comprises three static events, EV1, EV2 and EV3, the initial order can be EV1, EV2, EV3, after the first 10-second period the order can become EV2, EV3, EV1, after the second 10-second period the order can become EV3, EV1, EV2, and so on.

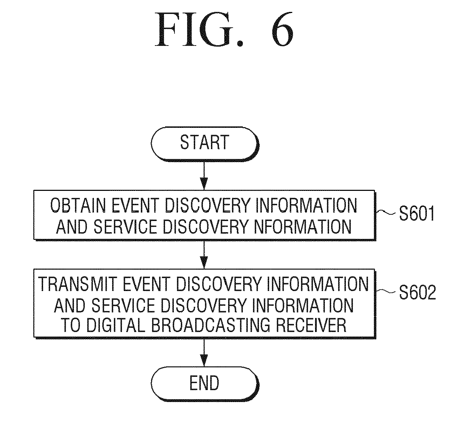

Figure 6 shows a flow diagram explaining a method of providing discovery information to a receiver, according to an embodiment.

A service discovery server can use the method of Fig. 6 to provide service discovery information and event discovery information for a non-linear service to a digital broadcasting receiver.

At step S601, the server obtains event discovery information for each one of a plurality of static events, the event discovery information including event type information identifying the type of static event to which the event discovery information relates. In the present example, the server also obtains service discovery information identifying content relating to the non-linear service, such as the service discovery information described above with reference to Fig. 4.

Then, at step S602, the server transmits the event discovery information and service discovery information to a digital broadcasting receiver.

The methods shown in any of Figs. 2 to 6 can be implemented in the form of computer program instructions, stored on a non-transitory computer-readable storage medium, which when executed on a processor performs the method.

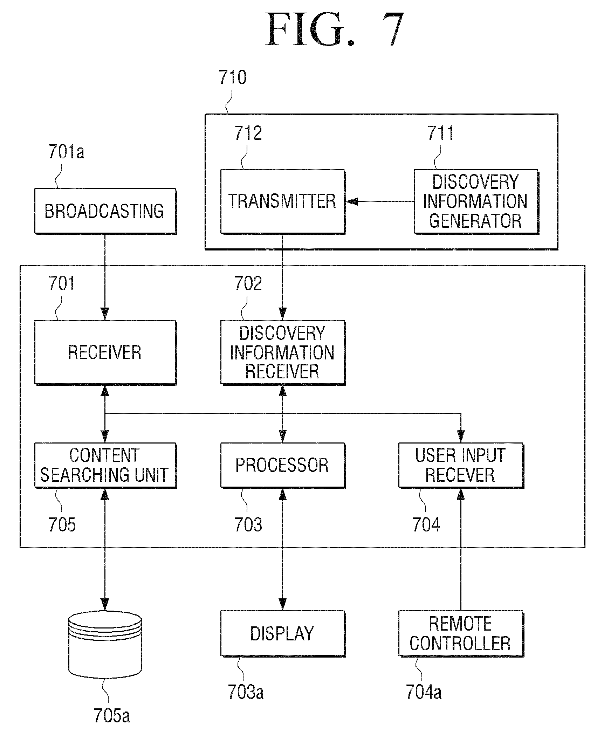

Figure 7 schematically shows a system including a digital broadcast receiver and a server for providing discovery information to the receiver, according to an embodiment.

As shown in Fig. 7, the system comprises a digital broadcasting (or broadcast) receiver 700, a discovery information server 710, a broadcaster 701a, a display 703a, a remote controller 704a, and a content source 705a. The digital broadcasting receiver 700 can implement a method, such as the one described above with reference to Fig. 2, to display a channel guide including a plurality of linear services and a non-linear service.

The digital broadcasting receiver 700 comprises a receiver 701, a discovery information receiver 702, a processor 703, a user input receiver 704, and a content searching unit 705. The receiver 701 is arranged to receive a plurality of linear services from the broadcaster 701a, for example through a terrestrial or satellite RF stream, or over IP. The discovery information receiver 702 is arranged to receive event discovery information from the discovery information server 710.

In the present embodiment, the digital broadcasting receiver 700 is embodied as a STB (Set-Top-Box), and the display unit 703a is a television connected to the STB. That is, the digital broadcasting receiver 700 and display unit 703a are physically separate. As such, the processor 703 is arranged to control the display unit 703a to display a channel guide, such as the one shown in Fig. 1, including the plurality of linear services and the non-linear service. In other embodiments however, the digital broadcasting receiver 700 and display unit 703a can be physically embodied as a single device. In response to user input selecting one of the static events in the non-linear service from the channel guide, the processor 703 is arranged to perform one of a plurality of predetermined actions corresponding to the type of static event selected by the user input.

Also, in the present embodiment the user input receiver 704 is arranged to receive the user input from a remote controller 704a, for example, over an infrared (IR) link. However, the embodiments are not limited to receiving user input in this way. In other embodiments, the user input could be received differently. For example, the user input receiver 704a could be a motion tracking, eye tracking or voice recognition interface arranged to detect user input directly, or a key-based user interface included in the digital broadcasting receiver 700.

The content searching unit 705 can search one or more content sources 705a over a suitable connection, allowing the receiver 700 to implement a method, such as the one shown in Fig. 3. In the present embodiment a content source 705a is illustrated which is separate to the digital broadcasting receiver 700. For example, the content source 705a could be a home media server. In other embodiments, the content source 705a can be included in the digital broadcasting receiver 700, for example as an internal hard disk drive.

The discovery information server 710 comprises a discovery information generator 711, and a transmitter 712 arranged to communicate with the discovery information receiver 702. The discovery information generator 711 can generate event and service discovery information, as described above in step S601 of Fig. 6, which can then be transmitted to the digital broadcasting receiver 700 via the transmitter 712. In the present embodiment, the event and service discovery information is transmitted over IP, and the transmitter 712 and discovery information receiver 702 can be any suitable network interfaces. The link between the transmitter 712 and discovery information receiver 702 can be bidirectional, enabling the digital broadcasting receiver 700 to request the event discovery information and service discovery information from the discovery information server 710.

Embodiments have been described in which a non-linear service includes a plurality of static events, that is, events which are accessible at any time rather than only at specific predefined times. In some embodiments, a non-linear service can also include one or more linear events in addition to the static events. In such embodiments, since the linear event is associated with a particular broadcast time, the linear event can be displayed adjacent to the non-linear service identifier, together with the static events, when the channel guide is displaying a time window in which the linear event is to be broadcast. When the channel guide is displaying another time window, outside of the broadcast time of the linear event, the channel guide may only display the static events.

Embodiments have been described in which linear services and a non-linear service are included in a channel list. As shown in Fig. 1, the non-linear service can be assigned its own LCN, which can be any unused LCN, that is, any LCN not already occupied by another service. The LCN could be assigned by the receiver, or could be defined by LCN information included in the service discovery information. In some embodiments, the non-linear service may not be assigned an LCN, but may be inserted between two linear services in the channel list. In this case, the service discovery information could identify where in the channel list the non-linear service is to be inserted. In yet other embodiments, a plurality of non-linear services can share the same LCN, which may be defined by the service discovery information.

Furthermore, in some embodiments the identification information for the linear services and the non-linear service can be displayed differently in the channel guide, by using different display settings for linear and non-linear services. This can enable a user to easily distinguish between linear and non-linear services. In the example shown in Fig. 1, the channel identifier for each non-linear service is displayed in bold text, whereas the channel identifier for each linear service is displayed in plain text. Other examples of identification information include a textual description of the service, an image corresponding to the service, and a webpage (e.g. at a location identified by a Uniform Resource Locator URL included in the service discovery information). The display settings for the non-linear service can be pre-programmed into the receiver, can be set according to user preference, or can be defined by discovery information. Examples of display settings include: a navigation style setting defining a navigation method to be applied when a user navigates the channel guide (e.g. event stays in position when scrolling the channel list, or focus stays in position while events are moved); a color setting defining a color in which the identification information is to be displayed in the channel guide; a dimension setting defining the size of a region in which the identification information is to be displayed in the channel guide; and an animation setting defining an animation to be applied when displaying the identification information in the channel guide.

As discussed, embodiments of the invention can provide a broadcasting receiver arranged to provide linear services related to linear events associated with predetermined broadcast times and non-linear services related to static events that are not associated with a predetermined broadcast time, the broadcasting receiver comprising: a receiver arranged to receive a plurality of linear services each including a plurality of linear events broadcast at predetermined times; a discovery information receiver arranged to receive event discovery information including event type information for identifying a type of static event related to discovery information defining a plurality of static events; a processor arranged to control a display unit to display a channel guide including the linear services and the non-linear services; and a user input receiver arranged to receive user input selecting one of the static events of the non-linear services from the channel guide, wherein the processor is arranged to perform one of a plurality of predetermined actions corresponding to the type of static event selected by the user input.

Embodiments have been described in relation to digital broadcasting receivers. The receiver can be Digital Video Broadcasting DVB receiver, although the embodiments are not limited to DVB systems. For example, other embodiments could be applied to an Open IPTV Forum (OIPF) system, Digital Entertainment Content Ecosystem (DECE) system, Advance Televisions Systems Committee (ATSC) system or Integrated Services Digital Broadcasting (ISDB) system, instead of DVB.

While certain embodiments have been described herein with reference to the drawings, it will be understood that many variations and modifications will be possible without departing from the scope as defined in the accompanying claims.

## Claims

1. A broadcasting receiver arranged to receive linear services related to linear events broadcast at predetermined times and non-linear services relating to static events regardless of time, the broadcasting receiver comprising:
a receiver arranged to receive a plurality of linear services each including a plurality of linear events broadcast at predetermined times;
a discovery information receiver arranged to receive event discovery information including event type information for identifying a type of static event related to discovery information defining a plurality of static events;
a processor arranged to control a display unit to display a channel guide including the linear services and the non-linear services; and
a user input receiver arranged to receive user input selecting one of the static events of the non-linear services from the channel guide,
wherein the processor is arranged to perform one of a plurality of predetermined actions corresponding to the type of static event selected by the user input.

2. The broadcasting receive of claim 1, wherein the plurality of static events include a content group static event for selecting a group of content items, and the broadcasting receiver further comprises:
a content searching unit arranged to search one or more content sources to identify a plurality of available content items from the group of content items,
wherein as the predetermined action, the processor displays a content selection menu for selecting one of the available content items in response to the user input selecting the content group static event, and in response to second user input selecting one of the available content items from the content selection menu, obtains and reproduces the selected content item.

3. The broadcasting receive of claim 2, wherein the event discovery information defining the content group static event includes one or more source identifiers for identifying the one or more content sources to be searched.

4. The broadcasting receiver of any one of claim 1 to claim 3, wherein the discovery information receiver is arranged to receive service discovery information identifying content relating to the non-linear services, and
wherein in response to a user input navigating the non-linear services in the channel guide, the processor is arranged to reproduce the identified content in the channel guide.

5. The broadcasting receiver of claim 4, wherein the service discovery information includes content location information defining a location from which content can be obtained, and
wherein the broadcasting receiver is arranged to obtain the content from the location identified by the content location information.

6. The broadcasting receiver of claim 4 or claim 5, wherein the service discovery information includes loop information indicating whether the content relating to the non-linear services is to be looped,
wherein in response to the loop information indicating that the content is to be looped, the processor is arranged to reproduce the identified content again from the beginning after reproduction of the identified content has completed, and
wherein in response to the loop information indicating that the content is not to be looped, the processor is arranged to reproduce the identified content only once in the channel guide.

7. The broadcasting receiver of any one of claims 4 to 6, wherein the processor is arranged to display identification information for each one of the linear services in the channel guide, and is further arranged to display identification information for the non-linear services differently from the identification information for each one of the linear services.

8. The broadcasting receiver of claim 7, wherein the identification information for the non-linear services comprises an identifier of the services, and/or a textual description of the services, and/or an image corresponding to the service, and/or a webpage at a location identified by at least one of Uniform Resource Locators (URLs) included in the discovery information.

9. The broadcasting receiver of claim 7 or claim 8, wherein the processor is arranged to display the identification information for the non-linear services according to one or more display settings, the display settings including at least one of:
a navigation style setting defining a navigation method to be applied when a user navigates the channel guide; and/or
a colour setting defining a colour in which the identification information is to be displayed in the channel guide; and/or
a dimension setting defining the size of a region in which the identification information is to be displayed in the channel guide; and/or
an animation setting defining an animation to be applied when displaying the identification information in the channel guide.

10. The broadcasting receiver of claim 9, wherein at least one of the service discovery information and the event discovery information includes display information defining the one or more display settings.

11. The broadcasting receiver of any one of claim 1 to claim 10, wherein the event discovery information further includes scripting information identifying a predefined condition and a predefined action to change the appearance of the non-linear services in the channel guide, and
wherein while displaying the channel guide, the processor is arranged to determine whether the predefined condition has been met, and in response to the predefined condition being met, perform the predefined action to change the appearance of the non-linear services in the channel guide.

12. The broadcasting receiver of any one of claim 1 to claim 11, wherein the discovery information receiver is further arranged to receive service discovery information for each one of a plurality of non-linear services, the service discovery information for each non-linear service including a Logical Channel Number LCN for that non-linear service, and wherein different ones of the plurality of non-linear services share the same LCN.

13. The broadcasting receiver of any one of claim 1 to claim 12, wherein the predetermined actions include at least one of:
connecting to a server to receive and reproduce online audio and/or video content; and/or
connecting to a local source to receive and reproduce local audio and/or video content; and/or
launching a web browser application to display a webpage identified by a Uniform Resource Locator (URL) included in the event discovery information; and/or
launching an application at the receiver; and/or
displaying a banner over the channel guide; and/or
setting a reminder for one of the linear events due to be broadcast at a predetermined time in the future; and/or
switching an input source of a display to reproduce content from a different source; and/or
selecting one or more linear services and/or one or more non-linear services according to a predetermined criteria, and displaying the selected linear services and/or non-linear services in a second channel guide separate from the previously-displayed channel guide.

14. The broadcasting receiver of any one of claim 1 to claim 13, wherein the non-linear service further includes one or more linear events.

15. A method of controlling a broadcasting receiver arranged to provide linear services broadcasting linear events at predetermined times and non-linear services broadcasting stating events regardless of times, the method comprising:
receiving event discovery information including event type information for identifying a type of static event related to discovery information defining a plurality of static events;
displaying a channel guide including the linear services and the non-linear services; and
in response to the user input selecting one of the static events in the non-linear services from the channel guide, performing one of a plurality of predetermined actions corresponding to the type of static event selected by the user input.
